# EUROPEAN PATENT SPECIFICATION

(11) **EP 3 969 952 B1**
(45) Date of publication and mention of the grant of the patent: **07.08.2024**
(21) Application number: 20729375.4
(22) Date of filing: 07.05.2020
(51) Int. Cl.: G02B 6/44

(54) **FIBER OPTIC STRAIN RELIEF**
GLASFASERZUGENTLASTUNG
SOULAGEMENT DE CONTRAINTE DE FIBRE OPTIQUE

(30) Priority: 16.05.2019 US 201962848661 P
(43) Date of publication of application: 23.03.2022
(73) Proprietor: Corning Research & Development Corporation, Corning, New York 14831 (US)
(72) Inventor: GAJEK, Max, 93-590 Lodz (PL); RUDA, Michal, 95-060 Brzeziny (PL)
(74) Representative: Reeve, Nicholas Edward
(86) International application number: PCT/US2020/031769
(87) International publication number: WO 2020/231720

(56) References cited:
- WO-A1-2019/006176
- CN-U- 208 299 489
- GB-A- 2 046 242
- US-A1- 2013 233 612
- US-B2- 8 331 754

## Description

### TECHNICAL FIELD

This disclosure generally pertains to fiber optic strain reliefs, and more particularly to an automatically engaging fiber optic cable strain relief.

### BACKGROUND

In fiber optic networks, fiber optic cables may be connected to various fiber optic assemblies (e.g., hardware, housings, enclosures, etc.). The fiber optic cables are typically restrained at these connection points to protect optical fibers within the cables from potentially damaging axial, torsional, and/or bending loads. For example, the loads may be due to routing of the fiber optic cables and/or weight of the fiber optic cables. The devices or arrangements for restraining the fiber optic cables are often refer to as "strain reliefs." In one example of a strain relief to prevent axial strain on a fiber optic cable from being transferred to one or more optical fibers, the fiber optic cable is restrained in position by clamping the cable between two surfaces. Generally, the installer engages the two surfaces using clips, screws, O-rings, or the like thereby applying pressure to an outer surface of the fiber optic cable. This example may require three touch points and significant time to properly engage the fiber optic cable, including holding the fiber optic cable in position, holding one or more clamping elements in position, holding or actuating one or more tools, etc., which may be cumbersome for installers. Additionally, improper installation, such as overtightening, may cause signal attenuation or damage to the optical fiber(s).

In another example strain relief, a fiber optic cable may be tied to a fiber optic assembly. For example, aramid yarn (e.g., Kevlar^{®}) in the cable may be tied to one or more features of the assembly. This example also requires multiple touch points and time to properly engage the fiber optic cable to the assembly.

In yet a further example, fastening components, such as hook and loop fasteners, tape, or the like, may be utilized to attach a fiber optic cable to a desired position in a fiber optic assembly. This example enables a relatively fast engagement. However, these fastening components may not provide the desired amount of strain relief. Further, the ability to attach the fiber optic cable to various position in the assembly may introduce installation errors into the installation process.

US 2013/233612 A1 discloses a strain relief device having a rectangular tubular body having an internal strength member securing section disposed within the cable channel disposed within the rectangular tubular body and a pair of clips disposed on opposite sides of the outer surface to secure the strain relief device into an opening in a standard telecommunication mounting structure. The rectangular tubular body comprises a base and a cover that is attachable to the base. The base of the strain relief device includes an outer surface and an inner surface wherein the inner surface defines a cable channel extending between a first end of the base and a second end of the base.

WO 2019/006176 A1 discloses devices such as multiports comprising connection ports with associated securing features and methods for making the same. In one embodiment, the device comprises a shell, at least one connection port, and at least one securing feature. The at least one connection port is disposed on the multiport with the at least one connection port comprising an optical connector opening extending from an outer surface of the multiport to a cavity of the multiport and defining a connection port passageway. The at least one securing feature is associated with the connection port passageway, and is biased by a resilient member.

CN 208299489 U discloses a cable clamping and positioning device. The cable clamping and positioning device comprises a lower casing, a rear clamping part, a sliding block and an elastic part, the rear clamping part is connected to the lower casing, the sliding block comprises a front clamping part and a pressing part which are connected to each other.

US 8 331 754 B2 discloses a fiber optic strain relief device. The device has a base that attaches to a piece of equipment and/or hardware. A length of strap positions in the base and forms a loop. The loop is adapted to at least partially encircle a portion of a cable positioned at the base. A strap tightener incrementally shortens the length of the strap, reducing the loop and tightening the strap around the cable. The strap tightener may be a ratchet assembly comprising an actuator, a ratchet cap, a pin, a ratchet lock and a release. The length of strap inserts into a slot in the pin. The ratchet assembly operates to tighten the length of strap encircling the portion of the cable by incrementally rotating the pin. The release allows the strap to be loosened around the fiber optic cable.

GB 2 046 242 A discloses a small hand-held fibre optic cleaving tool which comprises two close fitting discs, one being a body member, the other a cutting member; the cutting member is rotatably held against the body member by, for example, an entrapped ball running in a "V" groove in the periphery of the cutting member. A diamond cutter is spring retained within the cutting member and a fibre optic receiving passageway extends axially through both discs. A fibre clamp can be incorporated in the body member to secure the fibre optic. Rotation of the cutting member scores the periphery of the fibre optic whereafter an applied tension results in a clean fracture.

### SUMMARY OF THE INVENTION

The invention is defined in the independent claims to which reference should now be made. Advantageous features are set forth in the dependent claims.

In an example embodiment, a fiber optic cable strain relief is provided that automatically engages a cable using a biased "push button" type actuator. A body of the strain relief may be configured to be connected to a standard connector port, such as a standard connector (SC) port, or other similar connector ports. The body and actuator may include a through aperture configured to receive a fiber optic cable and retain the fiber optic cable therein. The actuator may be configured to move relative to the body between a capture position and a release position. In the release position, a body cable aperture and an actuator cable aperture are substantially aligned allowing the fiber optic cable to be easily inserted and removed into and out of the strain relief. In the capture position, the body cable aperture and the actuator cable aperture are offset causing a compressive force to be applied to the fiber optic cable when inserted into the body cable aperture and the actuator cable aperture. Advantageously, the actuator may be operated by depressing the actuator and automatically returns to the capture position due to pressure exerted by a biasing element. As such, the strain relief utilizes only two touch points to engage the cable in the strain relief, e.g. depressing the actuator to move the strain relief to the release position and inserting the cable into the strain relief

In some example embodiments, the strain relief may include additional attachment points to further restrict movement and reduce strain on the fiber optic cable. In one such embodiment, the strain relief includes one or more cable anchors, or hooks, configured to retain a fabric portion of the fiber optic cable, such as a Kevlar layer.

Additional features and advantages will be set forth in the detailed description which follows, and in part will be apparent to those skilled in the art from the description or recognized by practicing the embodiments as described in the written description and claims hereof, as well as the appended drawings.

It is to be understood that both the foregoing general description and the following detailed description are merely exemplary, and are intended to provide an overview or framework to understand the nature and character of the claims.

The accompanying drawings are included to provide a further understanding, and are incorporated in and constitute a part of this specification. The drawings are illustrative of selected aspects of the present description, and together with the specification explain principles and operation of methods, products, and compositions embraced by the present description. Features shown in the drawing are illustrative of selected embodiments of the present description and are not necessarily depicted in proper scale.

### BRIEF DESCRIPTION OF THE DRAWINGS

While the specification concludes with claims particularly pointing out and distinctly claiming the subject matter of the written description, it is believed that the specification will be better understood from the following written description when taken in conjunction with the accompanying drawings, wherein:
FIG. 1 is a schematic diagram of an exemplary FTTx network according to an example embodiment;
FIG. 2 is an example fiber optic assembly according to an example embodiment;
FIG. 3 is an example adapter panel according to an example embodiment;
FIG. 4A illustrates a perspective view of fiber optic strain relief in a capture position with no fiber optic cable installed according to an example embodiment;
FIG. 4B illustrates cross-sectional view of the strain relief of FIG. 4A according to an example embodiment;
FIG. 5A illustrates a perspective view of a fiber optic strain relief in a release position according to an example embodiment;
FIG. 5B illustrates a cross-sectional view of the strain relief of FIG. 5A according to an example embodiment;
FIG. 6A illustrates a perspective view of a fiber optic strain relief in a capture position with a fiber optic cable installed according to an example embodiment;
FIG. 6B illustrates a cross-sectional view of the strain relief of FIG. 6A according to an example embodiment.
FIG 7. illustrate a rear perspective view of the strain relief of FIG. 6A according to an example embodiment.

The embodiments set forth in the drawings are illustrative in nature and not intended to be limiting of the scope of the detailed description or claims. Whenever possible, the same reference numeral will be used throughout the drawings to refer to the same or like features. The drawings are not necessarily to scale for ease of illustration an explanation.

### DETAILED DESCRIPTION

Optical fibers are useful in a wide variety of applications, including the telecommunications industry for voice, video, and data transmissions. The benefits of optical fiber are well known and include higher signal-to-noise ratios and increased bandwidth compared to conventional copper-based transmission technologies. To meet modern demands for increased bandwidth and improved performance, telecommunication networks are increasingly providing optical fiber connectivity closer to end subscribers. These initiatives include fiber-to-the-node (FTTN), fiber-to-the-premises (FTTP), fiber-to-the-home (FTTH), and the like (generally described as FTTx).

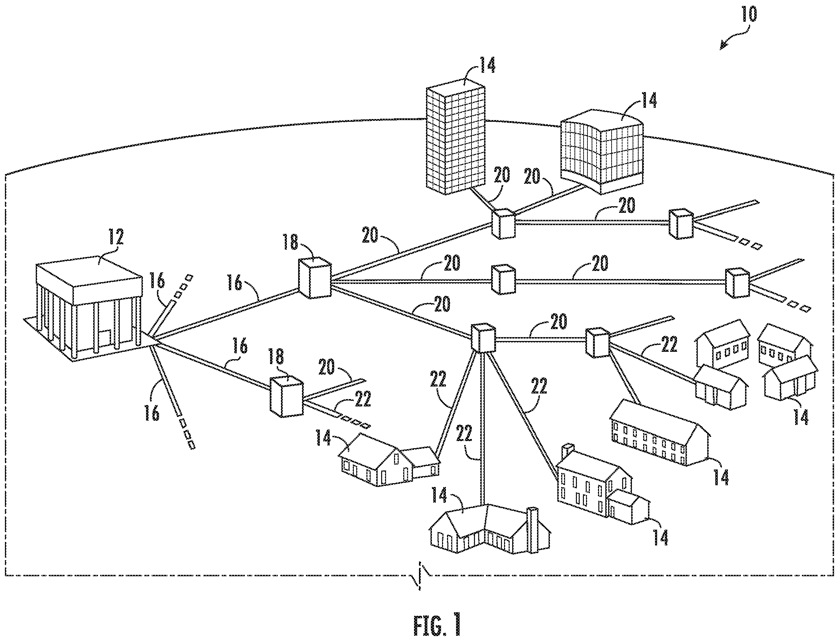

In an FTTx network, fiber optic cables are used to carry optical signals to various distribution points and, in some cases, all the way to end subscribers. For example, FIG. 1 is a schematic diagram of an exemplary FTTx network 10 that distributes optical signals generated at a switching point 12 (e.g., a central office of a network provider) to subscriber premises 14. Optical line terminals (OLTs; not shown) at the switching point 12 convert electrical signals to optical signals. Fiber optic feeder cables 16 then carry the optical signals to various local convergence points 18, which act as locations for splicing and making cross-connections and interconnections. The local convergence points 18 often include splitters to enable any given optical fiber in the fiber optic feeder cable 16 to serve multiple subscriber premises 14. As a result, the optical signals are "branched out" from the optical fibers of the fiber optic feeder cables 16 to optical fibers of distribution cables 20 that exit the local convergence points 18.

At network access points closer to the subscriber premises 14, some or all of the optical fibers in the distribution cables 20 may be accessed to connect to one or more subscriber premises 14. Drop cables 22 extend from the network access points to the subscriber premises 14, which may be single-dwelling units (SDU), multi-dwelling units (MDU), businesses, and/or other facilities or buildings. A conversion of optical signals back to electrical signals may occur at the network access points or at the subscriber premises 14.

There are many different network architectures, and the various tasks required to distribute optical signals (e.g., splitting, splicing, routing, connecting subscribers) can occur at several locations..

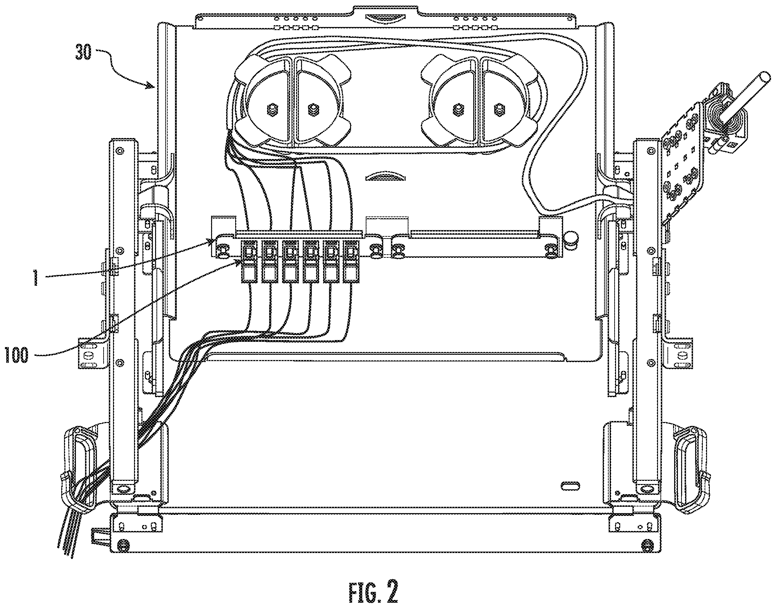

Regardless of whether a location is considered a switching point, local convergence point, network access point, subscriber premise, or something else, fiber optic equipment is used to house components that carry out one or more of the tasks. The term "fiber optic assembly" will be used in this disclosure to generically refer to such equipment (or at least portions thereof), which may include fiber distribution hubs (FDH), cabinets, closures, network interface devices, housings, etc. Fiber optic assemblies 30, such as depicted in FIG. 2, may include one or more adapter panels 1 configured to support optical connections between pairs of fiber optic connectors. As an example, the adapter panel 1 may include fiber optic connectors from one or more cable assemblies on a first side and fiber optic connectors from fiber pigtails on a second side.

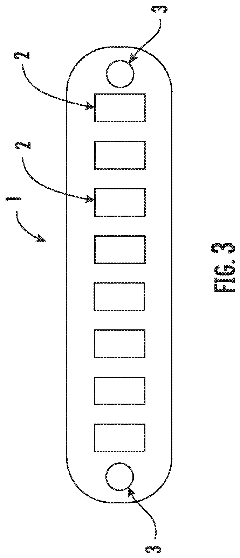

Turning to FIG. 3, the adapter panel may include one or more windows, or adapter ports 2, configured to receive an adapter, such as a standard connector (SC) adapter, a Lucent connector (LC) adapter, or other suitable adapters. The adapter panel 1 may include one or more captures 3, such as screws, clips, or the like, configured to attach the adapter panel 1 to a fiber optic assembly 30.

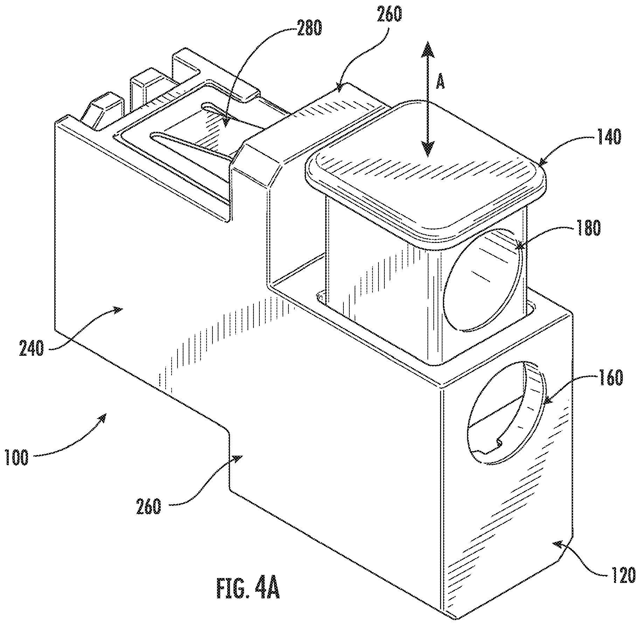

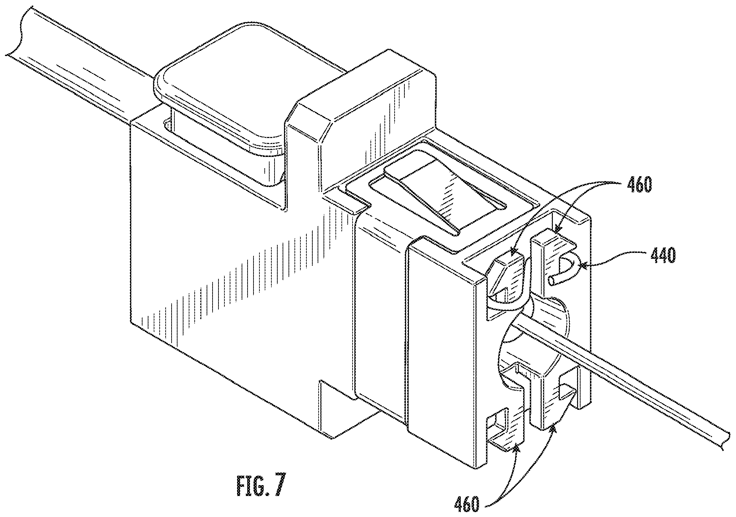

In FIG. 2, the fiber optic adapter has been replaced with a fiber optic strain relief assembly or device ("strain relief 100"). The strain relief 100 may limit or prevent axial stain or torsion applied to an optical fiber 420 disposed therein. Additionally, the strain relief 100 may enable the optical fiber to be passed through the strain relief without an intermediate adapter connection. Removing the intermediate connection may reduce signal attenuation or other connecter based signal problems. The strain relief 100 is discussed in further detail below in reference to FIGS. 4A-7.

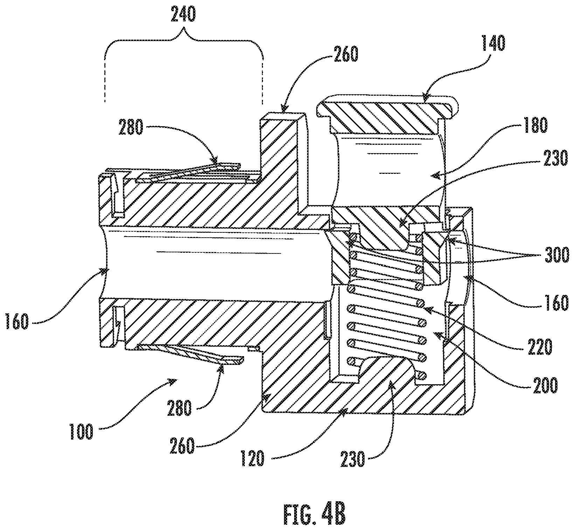

FIG. 4A illustrates a perspective view of a fiber optic strain relief 100 according to an example embodiment. FIG. 4B illustrates cross-sectional view of the strain relief 100 of FIG. 4A. The strain relief 100 may include a body 120 and an actuator 140. The body 120 may include a body cable aperture 160 configured to receive a fiber optic cable therethrough. Similarly, the actuator 140 may include an actuator cable aperture 180 configured to receive a portion of the fiber optic cable therethrough. The actuator 140 may be disposed at least partially within the body 120, such as within an actuator cavity or actuator receiver 200, shown in FIG. 2A. The actuator 140 may be configured to move relative to the body 120, within the actuator receiver 200, between a capture position and a release position, as depicted by arrow A. The release position may be defined as a position in which the body cable aperture 160 and the actuator cable aperture 180 are substantially aligned, such that a fiber optic cable may be received therein (i.e. extend through both apertures) with little or no resistance. The capture position may be defined as a position in which the body cable aperture 160 and the actuator cable aperture 180 are offset from each other.

The strain relief 100 may include a biasing element 220, such as a helical compression spring, conical spring, torsion spring, helical expansion spring, or the like, configured to bias the actuator toward the capture position. In an example embodiment, the biasing element may be disposed in the actuator receiver 200 between a wall of the body 120 and the actuator 140, as depicted in FIG. 4B. Additionally or alternatively, the biasing element 220, such as an expansion spring, may be disposed between a portion of the actuator 140 and a lip of the actuator receiver 200. In some example embodiments, the actuator receiver 200 and/or the actuator 140 may include one or more alignment features 230 configured to align the biasing element 220, within the actuator receiver 200, between the body 120 and the actuator 140.

In an example embodiment, the body 120 may include a connector feature 240 configured to couple the strain relief 100 to the fiber optic assembly 200. For example, the connector feature 240 may be a portion of the body 120 formed to allow the strain relief 100 to couple with an adapter port 2, such as a standard connector (SC) port, a Lucent connector (LC) port, or other suitable adapter ports. The connector feature 240 may include a flange 260 configured to limit travel of the strain relief 100 when fully inserted into the adapter port. The connector feature 240 may be interference fit within the adapter port 2 and/or may include one or more retention elements 280, such as spring clips, configured to retain the strain relief 100 in connection with the adapter port.

In some example embodiments, the body 120 and/or actuator 140 may include a travel stop 300 limiting movement of the actuator 140 beyond the capture position out of the body 120 of the strain relief 100. The travel stop 300 may include a beveled edge enabling the actuator 140 to pass in one direction and prevent travel in the opposing direction. In this way, the actuator 140 may be installed over the beveled edge into the body 120 and movement of the actuator 140 out of the body 120 may be prevented by the edge of the travel stop 300 opposite of the bevel, e.g. a lip of the travel stop, contacting a portion of the body 120 or actuator 140.

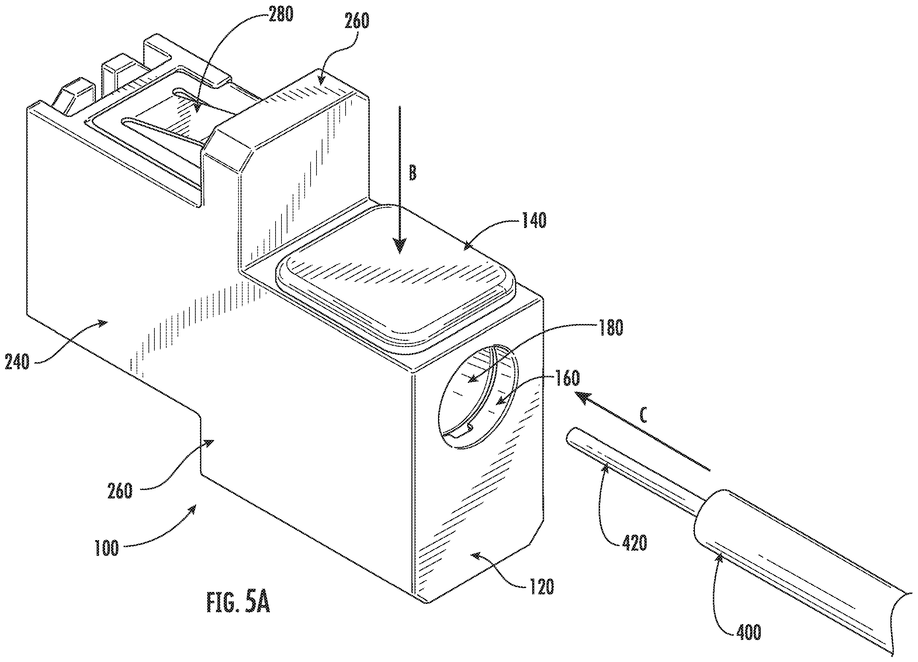

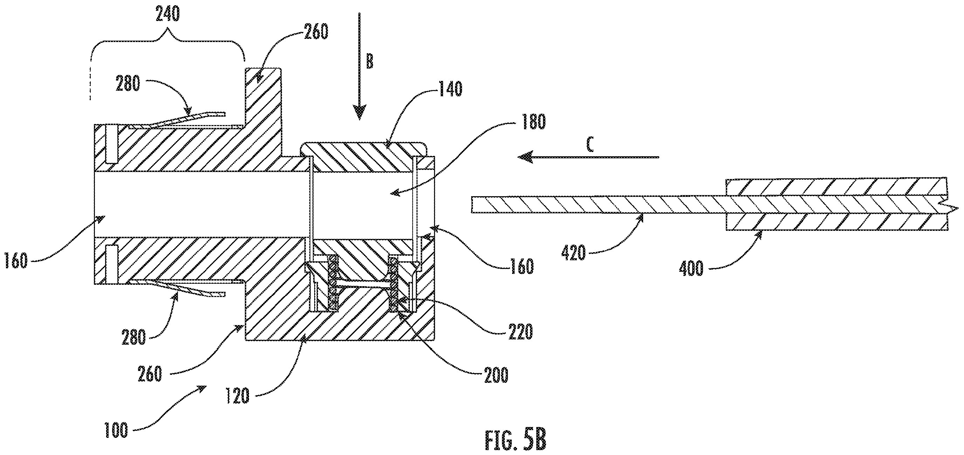

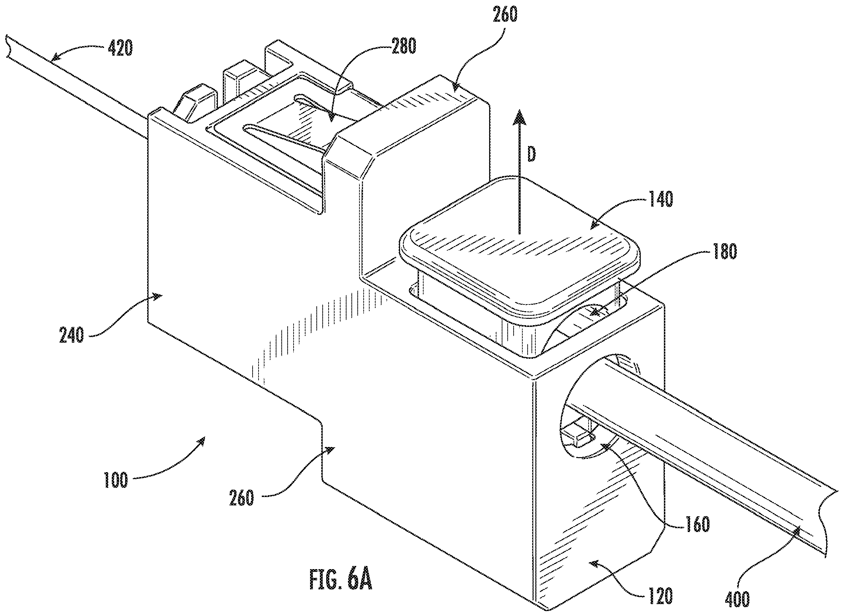

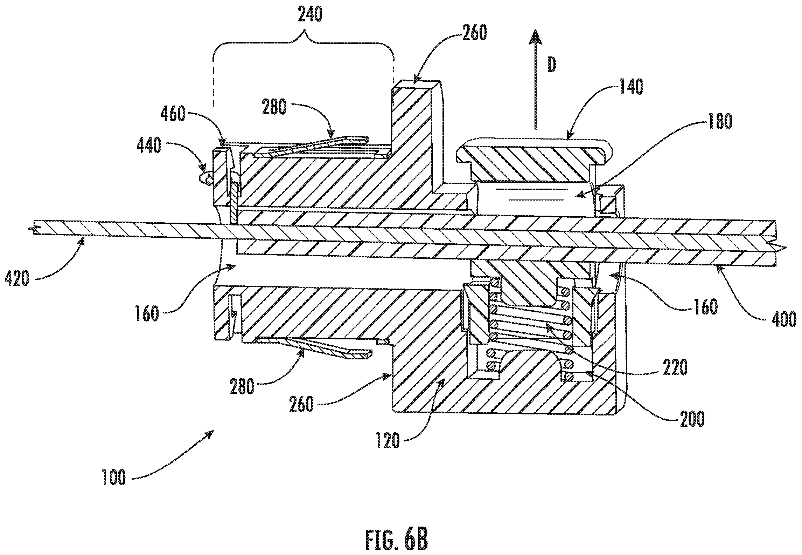

FIGS. 5A-7 depict a method of installing a fiber optic cable 400 into the strain relief 100. An installer may move the actuator 140 to the release position, such as by depressing the actuator 140, as indicated by arrow B in the embodiment depicted in FIGS. 5A and 5B. Depressing the actuator 140 may load the biasing element 220, such as by compressing a compression spring. As shown in FIG. 5B, in the release position the body cable aperture 160 is substantially aligned with the actuator cable aperture 180, such that the apertures provide little to no resistance to an insertion of the fiber optic cable 400. Once the actuator 140 of the strain relief 100 is in the release position, the installer may insert the fiber optic cable 400 through the body cable aperture 160 and the actuator cable aperture 180, as indicated by arrow C. The fiber optic cable 400 may include one or more optical fibers 420. In some example embodiments, the installer may remove a portion of jacketing of the fiber optic cable 400 to expose the one or more optical fibers 420. As depicted in FIGS. 6A-7, the fiber optic cable 400 may be inserted through the body cable aperture 160 and the actuator cable aperture 180. Preferably, the fiber optic cable 400 may be inserted through the body cable aperture 160 and the actuator cable aperture 180 to a position at which the optical fiber 420 extends out of the strain relief 100 and the jacketed portion of the fiber optic cable 400 terminates at, or near, the end of the body cable aperture 160, as depicted in FIGS. 6A and 6B.

Once the fiber optic cable 400 has been inserted into the strain relief 100 to the desired depth, the installer may release the actuator 140. The biasing element 220 may unload, biasing the actuator 1400 toward the capture position, as depicted by arrow D, such that the body cable aperture 160 and the actuator cable aperture 180 are offset from each other. The offset of the body cable aperture 160 and the actuator cable aperture 180 in the capture position causes a compressive force to be applied to the fiber optic cable 400. The compressive force applied to the fiber optic cable 400 may resist axial force applied to the fiber optic cable 400 by routing and/or weight of the fiber optic cable 400.

In some example embodiments, a sidewall of the body cable aperture 160 and/or the actuator cable aperture 180 may include a deformable material, such as rubber foam, or other suitable material configured to deform under pressure to distribute the compressive force along a greater area of the fiber optic cable 400, thereby reducing acute pressure points that may cause signal attenuation or damage to the optical fiber.

In an example embodiment, additional axial support may be provided by attaching strength members 440 (e.g., aramid yarn) of the fiber optic cable 400 to the strain relief 100. In some example embodiments, the strain relief 100 may include one or more cable anchors 460 disposed on the body 120 configured to retain strength members 440 of the fiber optic cable 400. In an example embodiment, the cable anchors 460 may include one or more hooks disposed at the distal end of the body 120, e.g. the output of the body cable aperture 160. The strength members 440, such as aramid yarn (e.g. Kevlar^{®}), of the fiber optic cable 400 may be tied or otherwise attached to the hooks thereby providing a lateral counter force, due to strain imposed on the strength members 440, to any axial force applied to the fiber optic cable 400.

To remove a fiber optic cable 400 from the strain relief 100, the process may be reversed. The installer may detach the strength members 440 of the fiber optic cable 400 from the one or more cable anchors 460, if necessary. The installer may then move the actuator 140 to the release position, such as by depressing the actuator 140 into the body 120, thereby removing the compressive force applied to the fiber optic cable 400 and loading the biasing element 220. The installer may remove the fiber optic cable 400 from the body cable aperture 160 and the actuator cable aperture 180 and release the actuator 140. The biasing element 220 may unload causing the actuator 140 to move back to the capture position.

The fiber optic cable strain relief described herein, including the strain relief 10, may provide an automatically engaging strain relief for fiber optic cables. The strain relief may be operated without tools. Particularly, the strain relief may be moved between a capture and release position by simply pushing an actuator, thereby reducing the number of touch points in a fiber optic cable installation. Additionally, cable anchors may be provided on a body of the strain relief to provide further axial retention strength. In some examples, the body of the strain relief may be configured to be installed in a fiber optic adapter port providing a convenient installation location.

In an example embodiment, a fiber optic cable strain relief assembly is provided including a body defining a body cable aperture configured to receive a fiber optic cable therethrough and an actuator disposed partially within the body. The actuator defines an actuator cable aperture configured to receive portion of the fiber optic cable therethrough, and the actuator is configured to move relative to the body between a capture position and a release position. The body cable aperture and the actuator cable aperture are substantially aligned in the release position and offset in the capture position. The fiber optic cable strain relief assembly also includes a biasing element configured to bias the actuator toward the capture position. The offset of the body cable aperture and the actuator cable aperture in the capture position causes a compressive force to be applied to the fiber optic cable when inserted into the body cable aperture and the actuator cable aperture.

In an example embodiment, a sidewall of the body cable aperture or the actuator cable aperture includes a deformable material. In some example embodiments, the body further comprises one or more cable anchors, configured to retain a fabric portion of the fiber optic cable. In an example embodiment, the one or more cable anchors include one or more hooks. In some example embodiments, the body includes a connector feature configured to couple the body to a fiber optic assembly. In an example embodiment, the biasing element comprises a compression spring. In some example embodiments, the body or the actuator comprises a travel stop limiting movement of the actuator beyond the capture position out of the body. In some example embodiments, the body includes a flange configured to limit travel of the body into an adapter port of a fiber optic assembly. In an example embodiment, the body includes a actuator receiver configured to receive the biasing element and a portion of the actuator therein. In some example embodiments, the biasing element is disposed between a wall of the actuator receiver and the actuator.

In an example embodiment, a method is provided for using a fiber optic strain relief assembly including one or more of the features described above. Additionally, an example fiber optic assembly is provided including an adaptor panel and fiber optic strain relief.

It will be apparent to those skilled in the art that various modifications and variations can be made without departing from the scope of the appended claims.

## Claims

1. A fiber optic cable strain relief assembly (100) configured to be inserted into an adapter port (2) of an adapter panel (1) associated with a fiber optic assembly (30), the fiber optic cable strain relief assembly (100) comprising:
a body (120) defining a body cable aperture (160) configured to receive a fiber optic cable (400) therethrough;
an actuator (140) disposed partially within the body (120), the actuator (140) defining an actuator cable aperture (180) configured to receive the fiber optic cable (400) therethrough, wherein the actuator (140) is configured to move relative to the body (120) between a capture position and a release position, and wherein the body cable aperture (160) and the actuator cable aperture (180) are substantially aligned in the release position and offset in the capture position; and
a biasing element (220) configured to bias the actuator (140) toward the capture position,
wherein when the fiber optic cable (400) is received through the body cable aperture (160) and the actuator cable aperture (180), the offset of the body cable aperture (160) and the actuator cable aperture (180) in the capture position causes a compressive force to be applied to the fiber optic cable (400).

2. The fiber optic cable strain relief assembly (100) of claim 1, wherein a sidewall of the body cable aperture (160) or a sidewall of the actuator cable aperture (180) comprises a deformable material.

3. The fiber optic cable strain relief assembly (100) of claims 1 or 2, wherein the body (120) further comprises one or more cable anchors (460), each of the one or more cable anchors (460) configured to retain yarn (440) of the fiber optic cable.

4. The fiber optic cable strain relief assembly (100) of claim 3, wherein the one or more cable anchors (460) comprise one or more hooks.

5. The fiber optic cable strain relief assembly (100) of any of claims 1-4, wherein the body (120) comprises a connector feature (240) configured to couple the body (120) to the adapter port (2) of the fiber optic assembly (30).

6. The fiber optic cable strain relief assembly (100) of any of claims 1-5, wherein the biasing element (220) comprises a compression spring.

7. The fiber optic cable strain relief assembly (100) of any of claims 1-6, wherein the body (120) or the actuator (140) comprises a travel stop (300) limiting movement of the actuator (140) out of the body (120).

8. The fiber optic cable strain relief assembly (100) of any of claims 1-7, wherein the body (120) comprises a flange (260) configured to limit travel of the body (120) into the adapter port (2) of a fiber optic assembly (30).

9. The fiber optic cable strain relief assembly (100) of any of claims 1-8, wherein the body (120) comprises an actuator receiver (200) configured to receive the biasing element (220) and a portion of the actuator (140) therein.

10. The fiber optic cable strain relief assembly (100) of claim 9, wherein the biasing element (220) is disposed between a wall of the actuator receiver (200) and the actuator (140).

11. A fiber optic assembly (30) comprising:
an adapter panel (1) comprising an adapter port (2);
the fiber optic cable strain relief assembly (100) according to any of claims 1 to 10 disposed in the adapter port (2).

12. A method of using a fiber optic strain relief assembly (100), the fiber optic strain relief assembly (100) including a body (120) and an actuator (140) disposed partially within the body (120), the body (120) defining a body cable aperture (160) configured to receive a fiber optic cable (400) therethrough, and the actuator (140) defining an actuator cable aperture (180) configured to receive the fiber optic cable (400) therethrough, the method comprising:
depressing the actuator (140) causing the actuator (140) to move relative to the body (120) from a capture position to a release position, wherein the body cable aperture (160) and the actuator cable aperture (180) are substantially aligned in the release position and offset in the capture position, and wherein a biasing element (220) is configured to bias the actuator (140) toward the capture position;
inserting the fiber optic cable (400) through the body cable aperture (160) and the actuator cable aperture (180), while the actuator (140) is in the release position;
releasing the actuator (140) causing the actuator (140) to move relative to the body (120) to the capture position, wherein the offset of the body cable aperture (160) and the actuator cable aperture (180) in the capture position causes a compressive force to be applied to the fiber optic cable (400); and
inserting the body (120) into an adapter port (2) of an adapter panel (1) associated with a fiber optic assembly (30).

13. The method of claim 12 further comprising:
attaching yarn (440) of the fiber optic cable (400) to one or more cable anchors (460) disposed on the body (120), wherein each of the one or more cable anchors (460) is configured to retain the yarn (440) of the fiber optic cable (400).

14. The method of claim 12 or 13, wherein the one or more cable anchors (460) comprise one or more hooks.

15. The method of any of claims 12 -14, wherein the body (120) or the actuator (140) comprises a travel stop (300) limiting movement of the actuator (140) out of the body (120).

## Patentansprüche

1. Glasfaserkabel-Zugentlastungsanordnung (100), die zum Einführen in einen Adapteranschluss (2) einer mit einer Glasfaseranordnung (30) assoziierten Adapterplatte (1) konfiguriert ist, wobei die Glasfaserkabel-Zugentlastungsanordnung (100) Folgendes umfasst:
einen Körper (120), der eine Körperkabelöffnung (160) definiert, die zum Aufnehmen eines Glasfaserkabels (400) durch sie konfiguriert ist;
einen Aktuator (140), der teilweise innerhalb des Körpers (120) angeordnet ist, wobei der Aktuator (140) eine Aktuatorkabelöffnung (180) definiert, die zum Aufnehmen des Glasfaserkabels (400) durch sie konfiguriert ist, wobei der Aktuator (140) zum Bewegen relativ zum Körper (120) zwischen einer Einfangposition und einer Löseposition konfiguriert ist, und wobei die Körperkabelöffnung (160) und die Aktuatorkabelöffnung (180) in der Löseposition im Wesentlichen fluchten und in der Einfangposition versetzt sind; und
ein Vorspannelement (220), das zum Vorspannen des Aktuators (140) zur Einfangposition hin konfiguriert ist,
wobei, wenn das Glasfaserkabel (400) durch die Körperkabelöffnung (160) und die Aktuatorkabelöffnung (180) aufgenommen wird, der Versatz der Körperkabelöffnung (160) und der Aktuatorkabelöffnung (180) in der Einfangposition bewirkt, dass eine Kompressionskraft auf das Glasfaserkabel (400) ausgeübt wird.

2. Glasfaserkabel-Zugentlastungsanordnung (100) nach Anspruch 1, wobei eine Seitenwand der Körperkabelöffnung (160) oder eine Seitenwand der Aktuatorkabelöffnung (180) ein verformbares Material umfasst.

3. Glasfaserkabel-Zugentlastungsanordnung (100) nach Anspruch 1 oder 2, wobei der Körper (120) ferner einen oder mehrere Kabelanker (460) umfasst, wobei jeder der ein oder mehreren Kabelanker (460) zum Festhalten von Fäden (440) des Glasfaserkabels konfiguriert ist.

4. Glasfaserkabel-Zugentlastungsanordnung (100) nach Anspruch 3, wobei die ein oder mehreren Kabelanker (460) einen oder mehrere Haken umfassen.

5. Glasfaserkabel-Zugentlastungsanordnung (100) nach einem der Ansprüche 1-4, wobei der Körper (120) ein Verbindermerkmal (240) aufweist, das zum Koppeln des Körpers (120) mit dem Adapteranschluss (2) der Glasfaseranordnung (30) konfiguriert ist.

6. Glasfaserkabel-Zugentlastungsanordnung (100) nach einem der Ansprüche 1-5, wobei das Vorspannelement (220) eine Druckfeder umfasst.

7. Glasfaserkabel-Zugentlastungsanordnung (100) nach einem der Ansprüche 1-6, wobei der Körper (120) oder der Aktuator (140) eine die Bewegung des Aktutors (140) aus dem Körper (120) begrenzende Bewegungssperre (300) umfasst.

8. Glasfaserkabel-Zugentlastungsanordnung (100) nach einem der Ansprüche 1-7, wobei der Körper (120) einen Flansch (260) aufweist, der zum Begrenzen der Bewegung des Körpers (120) in den Adapteranschluss (2) einer Glasfaseranordnung (30) konfiguriert ist.

9. Glasfaserkabel-Zugentlastungsanordnung (100) nach einem der Ansprüche 1-8, wobei der Körper (120) eine Aktuatoraufnahme (200) umfasst, die zum Aufnehmen des Vorspannelements (220) und eines Teils des Aktuators (140) darin konfiguriert ist.

10. Glasfaserkabel-Zugentlastungsanordnung (100) nach Anspruch 9, wobei das Vorspannelement (220) zwischen einer Wand der Aktuatoraufnahme (200) und dem Aktuator (140) angeordnet ist.

11. Glasfaseranordnung (30), die Folgendes umfasst:
eine Adapterplatte (1), die einen Adapteranschluss (2) umfasst;
die Glasfaserkabel-Zugentlastungsanordnung (100) nach einem der Ansprüche 1 bis 10 im Adapteranschluss (2) angeordnet.

12. Verfahren zur Verwendung einer Glasfaserkabel-Zugentlastungsanordnung (100), wobei die Glasfaserkabel-Zugentlastungsanordnung (100) einen Körper (120) und einen teilweise innerhalb des Körpers (120) angeordneten Aktuator (140) umfasst, wobei der Körper (120) eine Körperkabelöffnung (160) definiert, die zum Aufnehmen eines Glasfaserkabels (400) durch sie konfiguriert ist, und wobei der Aktuator (140) eine Aktuatorkabelöffnung (180) definiert, die zum Aufnehmen des Glasfaserkabels (400) durch sie konfiguriert ist, wobei das Verfahren Folgendes beinhaltet:
Niederdrücken des Aktuators (140), so dass der Aktuator (140) veranlasst wird, sich relativ zum Körper (120) von einer Einfangposition in eine Löseposition zu bewegen, wobei die Körperkabelöffnung (160) und die Aktuatorkabelöffnung (180) in der Löseposition im Wesentlichen fluchten und in der Einfangposition versetzt sind, und wobei ein Vorspannelement (220) zum Vorspannen des Aktuators (140) zur Einfangposition hin konfiguriert ist;
Einführen des Glasfaserkabels (400) durch die Körperkabelöffnung (160) und die Aktuatorkabelöffnung (180), während der Aktuator (140) in der Löseposition ist;
Lösen des Aktuators (140), so dass der Aktuator (140) veranlasst wird, sich relativ zum Körper (120) in die Einfangposition zu bewegen, wobei der Versatz der Körperkabelöffnung (160) und der Aktuatorkabelöffnung (180) in der Einfangposition bewirkt, dass eine Druckkraft auf das Glasfaserkabel (400) ausgeübt wird; und
Einführen des Körpers (120) in einen Adapteranschluss (2) einer mit einer Glasfaseranordnung (30) assoziierten Adapterplatte (1).

13. Verfahren nach Anspruch 12, das ferner Folgendes beinhaltet:
Anbringen von Fäden (440) des Glasfaserkabels (400) an einem oder mehreren am Körper (120) angeordneten Kabelankern (460), wobei jeder der ein oder mehreren Kabelanker (460) zum Festhalten der Fäden (440) des Glasfaserkabels (400) konfiguriert ist.

14. Verfahren nach Anspruch 12 oder 13, wobei die ein oder mehreren Kabelanker (460) einen oder mehrere Haken umfassen.

15. Verfahren nach einem der Ansprüche 12-14, wobei der Körper (120) oder der Aktuator (140) eine die Bewegung des Aktuators (140) aus dem Körper (120) begrenzende Bewegungssperre (300) umfasst.

## Revendications

1. Ensemble d'allègement de contrainte de câble à fibres optiques (100) configuré pour être inséré dans un port adaptateur (2) d'un panneau adaptateur (1) associé à un ensemble de fibres optiques (30), l'ensemble d'allègement de contrainte de câble à fibres optiques (100) comprenant :
un corps (120) définissant une ouverture de câble de corps (160) configurée pour recevoir un câble à fibres optiques (400) à travers elle ;
un actionneur (140) disposé partiellement à l'intérieur du corps (120), l'actionneur (140) définissant une ouverture de câble d'actionneur (180) configurée pour recevoir le câble à fibres optiques (400) à travers elle, dans lequel l'actionneur (140) est configuré pour se déplacer par rapport au corps (120) entre une position de capture et une position de relâchement, et dans lequel l'ouverture de câble de corps (160) et l'ouverture de câble d'actionneur (180) sont sensiblement alignées en position de libération et décalées en position de capture ; et
un élément de sollicitation (220) configuré pour orienter l'actionneur (140) vers la position de capture,
dans lequel lorsque le câble à fibres optiques (400) est reçu par l'ouverture de câble de corps (160) et l'ouverture de câble d'actionneur (180), le décalage de l'ouverture de câble de corps (160) et de l'ouverture de câble d'actionneur (180) en position de capture entraîne l'application d'une force de compression au câble à fibres optiques (400).

2. Ensemble d'allègement de contrainte de câble à fibres optiques (100) selon la revendication 1, dans lequel une paroi latérale de l'ouverture de câble de corps (160) ou une paroi latérale de l'ouverture de câble d'actionneur (180) comprend un matériau déformable.

3. Ensemble d'allègement de contrainte de câble à fibres optiques (100) selon les revendications 1 ou 2, dans lequel le corps (120) comprend en outre un ou plusieurs ancrages de câble (460), chacun des un ou plusieurs ancrages de câble (460) étant configuré pour retenir un brin (440) du câble à fibres optiques.

4. Ensemble d'allègement de contrainte de câble à fibres optiques (100) selon la revendication 3, dans lequel les un ou plusieurs ancrages de câble (460) comprennent un ou plusieurs crochets.

5. Ensemble d'allègement de contrainte de câble à fibres optiques (100) selon l'une quelconque des revendications 1 à 4, dans lequel le corps (120) comprend une caractéristique de connecteur (240) configurée pour coupler le corps (120) au port adaptateur (2) de l'ensemble de fibres optiques (30).

6. Ensemble d'allègement de contrainte de câble à fibres optiques (100) selon l'une quelconque des revendications 1 à 5, dans lequel l'élément de sollicitation (220) comprend un ressort de compression.

7. Ensemble d'allègement de contrainte de câble à fibres optiques (100) selon l'une quelconque des revendications 1 à 6, dans lequel le corps (120) ou l'actionneur (140) comprend une butée de course (300) limitant le mouvement de l'actionneur (140) hors du corps (120).

8. Ensemble d'allègement de contrainte de câble à fibres optiques (100) selon l'une quelconque des revendications 1 à 7, dans lequel le corps (120) comprend une bride (260) configurée pour limiter la course du corps (120) dans le port adaptateur (2) d'un ensemble de fibres optiques (30).

9. Ensemble d'allègement de contrainte de câble à fibres optiques (100) selon l'une quelconque des revendications 1 à 8, dans lequel le corps (120) comprend un récepteur d'actionneur (200) configuré pour y recevoir l'élément de sollicitation (220) et une partie de l'actionneur (140).

10. Ensemble d'allègement de contrainte de câble à fibres optiques (100) selon la revendication 9, dans lequel l'élément de polarisation (220) est disposé entre une paroi du récepteur d'actionneur (200) et l'actionneur (140).

11. Ensemble de fibre optique (30) comprenant :
un panneau adaptateur (1) comprenant un port adaptateur (2)
l'ensemble d'allègement de contrainte de câble à fibres optiques (100) selon l'une quelconque des revendications 1 à 10 disposé dans le port adaptateur (2).

12. Procédé d'utilisation d'un ensemble d'allègement de contrainte de câble à fibres optiques (100), l'ensemble d'allègement de contrainte de câble à fibres optiques (100) comprenant un corps (120) et un actionneur (140) disposé partiellement à l'intérieur du corps (120), le corps (120) définissant une ouverture de câble de corps (160) configurée pour recevoir un câble à fibres optiques (400) à travers elle, et l'actionneur (140) définissant une ouverture de câble d'actionneur (180) configurée pour recevoir le câble à fibres optiques (400) à travers elle, le procédé comprenant :
l'enfoncement de l'actionneur (140) amenant l'actionneur (140) à se déplacer par rapport au corps (120) d'une position de capture à une position de relâchement, dans lequel l'ouverture de câble de corps (160) et l'ouverture de câble d'actionneur (180) sont sensiblement alignées en position de libération et décalées dans la position de capture, et dans lequel un élément de sollicitation (220) est configuré pour solliciter l'actionneur (140) vers la position de capture ;
l'insertion du câble à fibres optiques (400) à travers l'ouverture de câble de corps (160) et l'ouverture de câble d'actionneur (180), alors que l'actionneur (140) est en position de relâchement ;
le relâchement de l'actionneur (140) amenant l'actionneur (140) à se déplacer par rapport au corps (120) jusqu'à la position de capture, dans lequel le décalage de l'ouverture de câble de corps (160) et de l'ouverture de câble d'actionneur (180) en position de capture entraîne l'application d'une force de compression au câble à fibres optiques (400) ; et
l'insertion du corps (120) dans un port adaptateur (2) d'un panneau adaptateur (1) associé à un ensemble de fibre optique (30).

13. Procédé selon la revendication 12, comprenant en outre :
la fixation d'un brin (440) du câble à fibres optiques (400) à un ou plusieurs ancrages de câble (460) disposés sur le corps (120), dans lequel chacun des un ou plusieurs ancrages de câble (460) est configuré pour retenir le brin (440) du câble à fibres optiques (400).

14. Procédé selon la revendication 12 ou 13, dans lequel les un ou plusieurs ancrages de câble (460) comprennent un ou plusieurs crochets.

15. Procédé selon l'une quelconque des revendications 12 à 14, dans lequel le corps (120) ou l'actionneur (140) comprend une butée de course (300) limitant le mouvement de l'actionneur (140) hors du corps (120).
